(19) Europäisches Patentamt
European Patent Office
Office européen des brevets

(11) **EP 3 578 774 A1**

(12) **EUROPEAN PATENT APPLICATION**
published in accordance with Art. 153(4) EPC

(43) Date of publication:
**11.12.2019 Bulletin 2019/50**

(51) Int Cl.:
*F02B 23/06* (2006.01)  *F02B 23/00* (2006.01)
*F02F 3/26* (2006.01)

(21) Application number: **18763019.9**

(22) Date of filing: **15.02.2018**

(86) International application number:
**PCT/JP2018/005208**

(87) International publication number:
**WO 2018/163742 (13.09.2018 Gazette 2018/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **10.03.2017 JP 2017046493**

(71) Applicant: **Mazda Motor Corporation**
**Aki-gun, Hiroshima 730-8670 (JP)**

(72) Inventors:
• **KANZAKI, Jun**
**Aki-gun**
**Hiroshima 730-8670 (JP)**
• **KATAOKA, Motoshi**
**Aki-gun**
**Hiroshima 730-8670 (JP)**
• **KIM, Sangkyu**
**Aki-gun**
**Hiroshima 730-8670 (JP)**
• **IIDA, Shinya**
**Aki-gun**
**Hiroshima 730-8670 (JP)**

(74) Representative: **Müller-Boré & Partner**
**Patentanwälte PartG mbB**
**Friedenheimer Brücke 21**
**80639 München (DE)**

(54) **DIESEL ENGINE**

(57) The diesel engine is provided with a cylinder, a cylinder head, a fuel injection valve, and a piston. The piston has a cavity, and a notch formed in a circumferential edge of the cavity. The notch includes a first recessed portion which is recessed radially outward from an inner circumferential wall surface of the cavity, and a second recessed portion which is recessed from a crown surface of the piston toward a bottom side of the cavity and continuously extends radially outward from an end, on the crown surface side, of the first recessed portion. A vertical wall, on a downstream side of a swirl flow, of the second recessed portion is formed to extend, in an arched manner, radially inward and toward the downstream side of the swirl flow from a position corresponding to a radially outer side end of the second recessed portion in a plan view.

FIG. 5

## Description

### Technical Field

The present invention relates to a diesel engine, and in particular, to a direct injection diesel engine in which a crown surface of a piston is recessed to have a cavity to which fuel is directly injected from a fuel injection valve.

### Background Art

A diesel engine is known in which a cavity is formed on a crown surface of a piston. In this engine, after arriving near a circumferential edge of the cavity, fuel injected from a fuel injection valve is guided to a center side of the cavity along an inner circumferential wall surface to have promoted mixing with air. In particular, in a medium load range or a high load range where a relatively large amount of fuel is injected, penetration (penetration force) of spray injected from the fuel injection valve is strong, and even at a place far from the fuel injection valve, the speed of the spray is maintained high to have promoted mixing with air.

On the other hand, in a low load range with a small fuel injection amount, spray is liable to stay near the circumferential edge of the cavity to reduce mixability with air. Although for improving mixability with air, it is effective to increase penetration of spray, when the penetration of the spray is excessively strong, an amount of heat dissipated from a wall surface near the circumferential edge of the cavity is increased to increase a cooling loss.

For solving the above problem, Patent Literature 1 discloses designing a shape of a cavity and a shape (length, bore) of a nozzle hole of a fuel injection valve to have a predetermined relationship such that penetration of spray does not become excessively strong in order to suppress a cooling loss in a low load range.

However, according to Patent Literature 1, while an increase in a cooling loss can be suppressed in a low load range, spray fluidity is low, so that it is impossible to promote mixing with air in the cavity. Therefore, local combustion is liable to occur near the circumferential edge of the cavity to increase NOx and soot in some cases due to high temperature and lack of oxygen derived from the local combustion.

### Citation List

### Patent Literature

Patent Literature 1: Japanese Unexamined Patent Publication No. 2015-232288

### Summary of Invention

The present invention has been made in light of the above circumstances, and an object of the present invention is to provide a diesel engine in which even spray having weak penetration is allowed to have fluidity in a cavity increased to have promoted mixing with air.

In order to achieve the above object, a diesel engine of the present invention includes a cylinder; a cylinder head which covers an end surface of the cylinder and in which an intake port for generating a swirl flow in a combustion chamber is formed; a piston having a cavity recessed to a side opposite to the cylinder head; and a fuel injection valve having a nozzle hole directed into the cavity of the piston positioned at a top dead center. The piston further has a notch which is formed in a circumferential edge of the cavity. The notch includes, in a part of the circumferential edge in the circumferential direction of the cavity, a first recessed portion which is recessed radially outward from an inner circumferential wall surface of the cavity, and a second recessed portion which is recessed from a crown surface of the piston toward a bottom side of the cavity and continuously extends radially outward from an end, on the crown surface side, of the first recessed portion. The second recessed portion has a bottom wall, and a vertical wall standing from a circumferential edge of the bottom wall on a downstream side of the swirl flow. The vertical wall is formed to extend, in an arched manner, radially inward and toward the downstream side of the swirl flow from a position corresponding to a radially outer side end of the second recessed portion in a plan view.

### Brief Description of Drawings

FIG. 1 is a sectional view schematically showing a combustion chamber of an engine according to one embodiment of the present invention.
FIG. 2 is a sectional view of a cavity forming the combustion chamber.

FIG. 3 is a plan view of a piston in which the cavity is provided.

FIG. 4A is a side view showing a structure of a fuel injection valve.

FIG. 4B is a sectional view showing the structure of the fuel injection valve.

FIG. 5 is a perspective view of the piston seen from a crown surface side.

FIG. 6 is a front view of a notch seen from arrow A in FIG. 5.

FIG. 7 is a plan view showing the notch in enlarged manner.

FIG. 8 is a perspective view showing the notch in enlarged manner.

FIG. 9 is an explanatory view showing spray and an air flow in the cavity.

FIG. 10 is an explanatory view showing a combustion state in a first half of the combustion.

FIG. 11 is an explanatory view showing a combustion state in a latter half of the combustion.

FIG. 12 is a plan view showing a piston according to a modification.

FIG. 13 is an explanatory view showing spray and an air flow in the piston shown in FIG. 12.

FIG. 14 is a sectional view showing a cavity in a case where an inclination angle of a circumferential wall is changed.

FIG. 15 is an explanatory view showing spray and an air flow in the cavity shown in FIG. 14.

## Description of Embodiments

Embodiments according to the present invention will be described below with reference to the accompanying drawings. The following description is substantially for illustrative purpose only and is not intended to limit the present invention, and applications or usages of the present invention. Additionally, the drawings are schematic in which a ratio of each distance and the like are different from real counterparts.

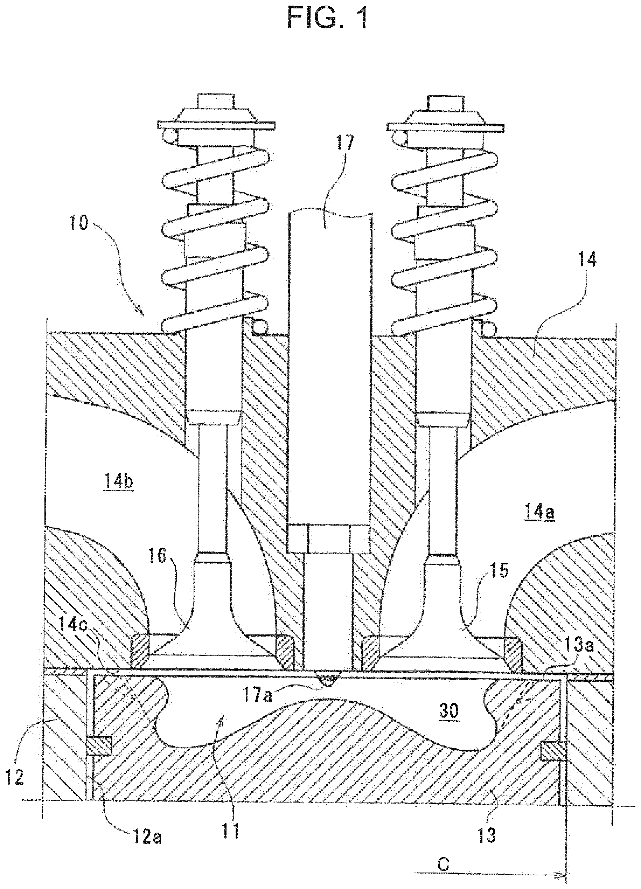

FIG. 1 shows a combustion chamber structure of a diesel engine according to one embodiment of the present invention. A combustion chamber 11 of an engine 10 is zoned by an inner circumferential surface of a cylinder 12a formed in a cylinder block 12, a crown surface 13a (hereinafter, referred to as a piston crown surface 13a) of a piston 13 reciprocating in the cylinder 12a, a lower surface 14c of a cylinder head 14 opposite to the piston crown surface 13a, and lower surfaces of an intake valve 15 and an exhaust valve 16 for opening and closing an intake port 14a and an exhaust port 14b formed in the cylinder head 14.

The piston crown surface 13a has a cavity 30 formed to be recessed toward a direction (downward) away from the lower surface 14c of the cylinder head 14 and has an inner space also forming the combustion chamber 11. The cavity 30 is configured to have a generally circular shape in a plan view as a basic shape. The cylinder head 14 has a fuel injection valve 17 attached thereto. The fuel injection valve 17 is positioned at the center of the cylinder 12a in a plan view and is disposed so as to have a front end facing the combustion chamber 11.

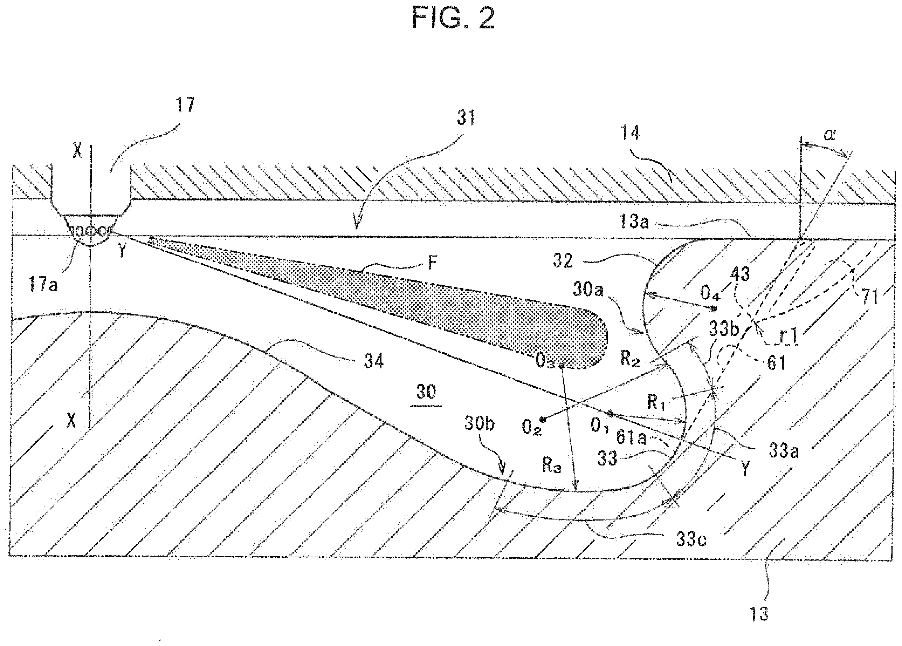

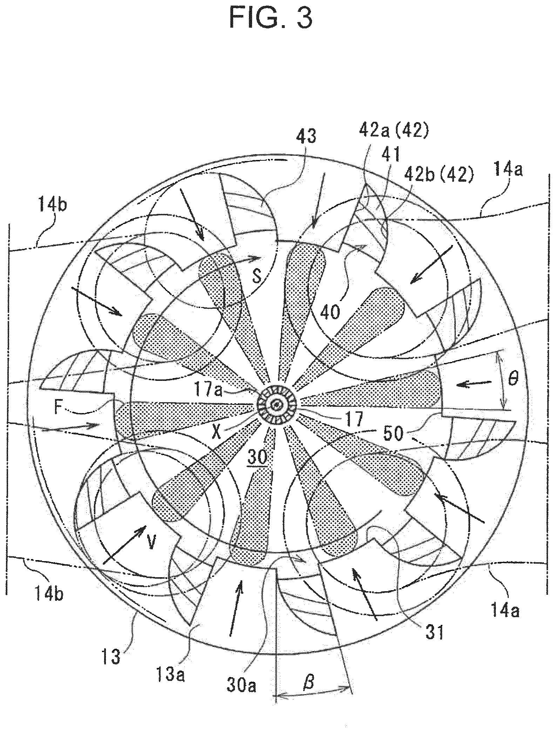

FIG. 2 is a sectional view of the combustion chamber 11 on a cross section passing through a center axis X of the cylinder 12a and FIG. 3 is a plan view of the combustion chamber 11. Both FIG. 2 and FIG. 3 show the piston 13 positioned at a compression top dead center, and also show spray of fuel injected from the fuel injection valve 17, where a reference code F denotes the spray. The cavity 30 is designed to have a shape and size that allow the fuel (the spray F) injected from the fuel injection valve 17 to be received when at least the piston 13 is positioned at or near the compression top dead center.

As shown in FIG. 2, the cavity 30 is configured to be of a so-called reentrant type. Specifically, a wall surface of the cavity 30 includes a lip portion 32, a peripheral portion 33, and a central ridge portion 34. The lip portion 32 is positioned at a circumferential edge of an opening 31 (hereinafter, referred to as the cavity opening 31) on an upper surface of a cavity 40 and has a smaller diameter than the inside of the cavity 30. The peripheral portion 33 extends from the lip portion 32 toward a bottom side of the cavity 30. The central ridge portion 34 extends from the peripheral portion 33 toward a central part of the cavity. The peripheral portion 33 is recessed radially outward so as to have a larger diameter than the lip portion 32. The central ridge portion 34 has a mountain shape protruding toward the fuel injection valve 17 positioned above a center part of the central ridge portion.

In other words, the cavity 30 has an inner circumferential wall surface 30a forming a radially outer wall of the cavity 30 and a bottom surface 30b forming a bottom of the cavity 30. The inner circumferential wall surface 30a includes the lip portion 32 and a part of the peripheral portion 33 on a radially outer side. The bottom surface 30b includes the central ridge portion 34 and a part of the peripheral portion 33 on a bottom side.

As shown in FIG. 3, in the circumferential edge of the cavity opening 31, a plurality of notches 40 aligned at an interval in a circumferential direction is radially formed. Each notch 40 is formed by radially outwardly recessing a region extending from the inner circumferential wall surface 30a of the cavity 30 over to the piston crown surface 13a. The plurality of notches 40 serves to increase fluidity of the spray F in the cavity 30 by introducing an air flow on the piston crown surface 13a into the cavity 30. Details will be described later.

A plurality of nozzle holes 17a is formed around the front end of the fuel injection valve 17. The fuel injection valve 17 injects fuel radially from the plurality of nozzle holes 17a as shown in FIG. 3. The fuel injection valve 17 is also disposed such that as shown in FIG. 2, when the piston 13 is at the compression top dead center, the spray F of fuel injected from each nozzle hole 17a is directed to the proximity of a boundary between the lip portion 32 and the peripheral portion 33 of the cavity 30.

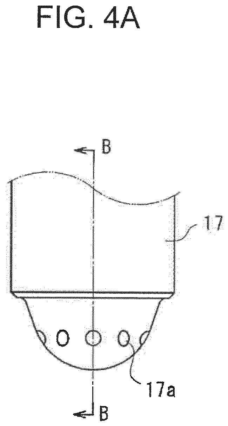

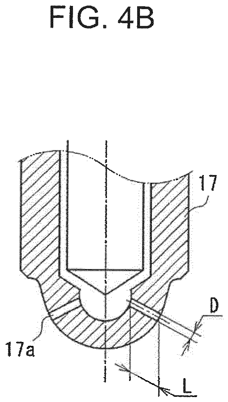

In the present embodiment, ten nozzle holes 17a are provided at equal intervals in a circumferential direction, and have the same size. FIGS. 4A and 4B show the front end of the fuel injection valve 17 in enlarged manner, FIG. 4A being a side view and FIG. 4B being a sectional view taken along line B-B in FIG. 4A.

As shown in FIG. 4B, the nozzle hole 17a is formed to have predetermined nozzle hole diameter D and nozzle hole length L. The nozzle hole diameter D and the nozzle hole length L of the nozzle hole 17a are designed to satisfy a predetermined relationship in relation to a cylinder diameter C (see FIG. 1), thereby realizing the spray F of low penetration in a low load range to reduce a cooling loss, as well as reducing soot in middle and high load ranges.

Returning to FIG. 2, the peripheral portion 33 of the cavity 30 includes a first portion 33a spaced most apart from the fuel injection valve 17, a second portion 33b positioned closer to the lip portion 32 than the first portion 33a, and a third portion 33c positioned closer to the central ridge portion 34 than the first portion 33a. The first portion 33a, the second portion 33b, and the third portion 33c are formed with arcs having centers $O_1$, $O_2$, and $O_3$ on the center side of the cavity 30, respectively.

Also in the present embodiment, a radius $R_2$ of the arc of the second portion 33b is set to be equal to a radius $R_3$ of the arc of the third portion, and a radius $R_1$ of the arc of the first portion 33a is set to be smaller than the radii $R_2$ and $R_3$. This makes a cross sectional shape of the peripheral portion 33 be a linearly symmetrical shape about a straight line Y as a center, the straight line Y linking a center position of the first portion 33a spaced most apart from the nozzle hole 17a of the fuel injection valve 17 and the nozzle hole 17a. In other words, the peripheral portion 33 is formed such that a part on the second portion 33b side with respect to the straight line Y and a part on the third portion 33c side with respect to the straight line Y are so as to be symmetrical to each other with respect to the straight line Y.

The lip portion 32 continuous with the second portion 33b of the peripheral portion 33 is formed with an arc having a center $O_4$ on a side opposite to the center of the cavity 30 on a cross section including the center axis X of the cylinder 12a.

As indicated by a chain double-dashed line in FIG. 3, the two intake ports 14a and the two exhaust ports 14b are open at the four corners of the combustion chamber 11. The two intake ports 14a are formed with a helical port and/or a tangential port. An axis of a part of at least one of the intake ports 14a (a port positioned lower right of FIG. 3 in the present embodiment) is designed to be oriented clockwise in FIG. 3, the part being open in the combustion chamber 11.

This makes it easy for new air introduced into the combustion chamber 11 through the intake port 14a positioned lower right in FIG. 3 to be introduced clockwise toward the combustion chamber 11. Thus, a swirl flow S flowing clockwise is generated in the combustion chamber 11. The swirl flow S is generated not only above the piston crown surface 13a but also within the cavity 30.

Also in the combustion chamber 11, there is generated a squish flow V flowing from a radially outer side to a radially inner side such that air positioned in a squish portion between the piston crown surface 13a and the lower surface 14c of the cylinder head 14 flows into the cavity 30 as the piston 13 goes toward the compression top dead center. In other words, in the present embodiment, the swirl flow S and the squish flow V are generated in the combustion chamber 11.

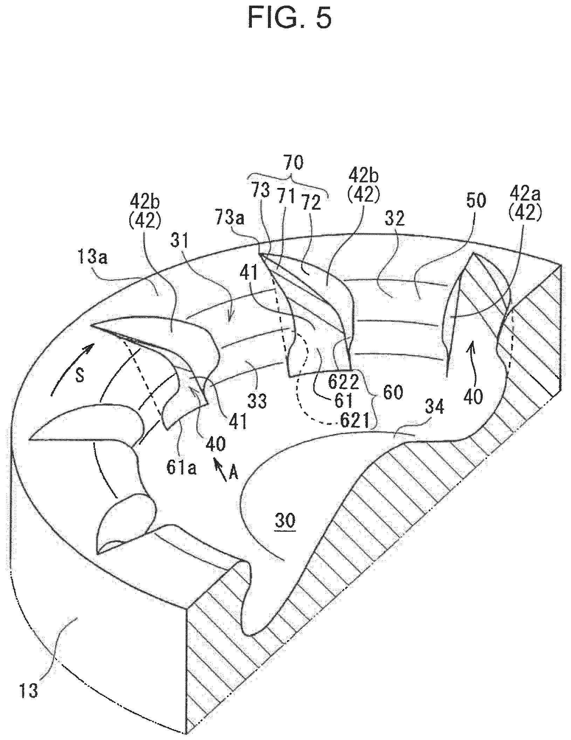

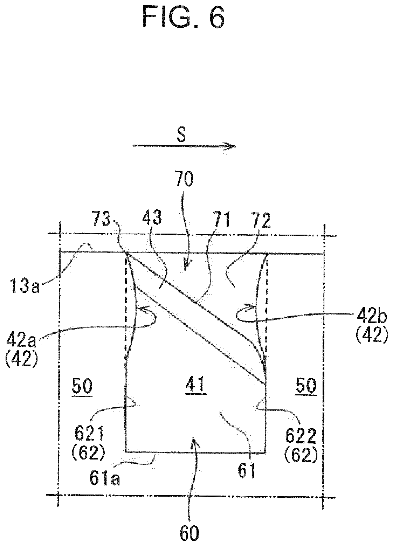

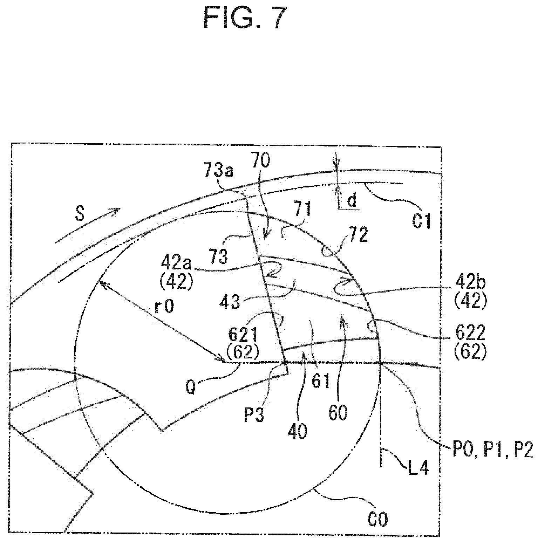

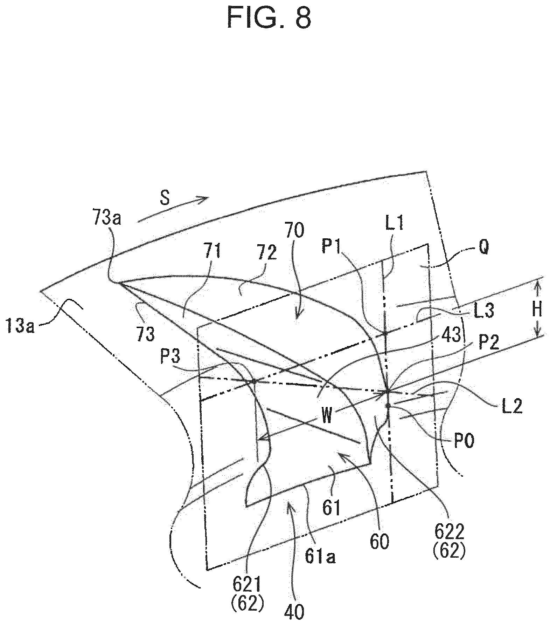

In the following, detailed description will be made of the notch 40 formed at the circumferential edge of the cavity opening 31 of the piston 13 with reference to FIG. 5 to FIG. 8. FIG. 5 is a perspective sectional view of the piston 13 and shows the cavity 30. FIG. 6 is a front view of the notch 40 seen from arrow A in FIG. 5. FIG. 7 is a plan view showing the notch 40 in enlarged manner. FIG. 8 is a perspective view showing the notch 40 in enlarged manner. As shown in FIG. 5, the plurality of notches 40 is formed at equal intervals in the circumferential direction and has the same size.

The notch 40 has a first recessed portion 60 provided at the circumferential edge of the cavity opening 31, and a second recessed portion 70 provided in the piston crown surface 13a so as to be continuous with an end, on the piston crown surface 13a side, of the first recessed portion 60. The notch 40 is defined by a bottom wall 41 forming a bottom surface of each of the recessed portions 60 and 70, and a pair of vertical walls 42 standing from both ends of the bottom wall 41 in the circumferential direction. The pair of vertical walls 42 has an upstream side vertical wall 42a positioned on an upstream side of the swirl flow S (a swirl upstream side) and a downstream side vertical wall 42b positioned on a downstream side of the swirl flow S (a swirl downstream side).

With reference to FIG. 3 in combination, the notches 40 are provided at positions avoiding the spray F injected from the fuel injection valve 17. In other words, with a basic shape part of the circumferential edge of the cavity opening 31 as a non-notch portion 50, the part being positioned between the adjacent notches 40, the fuel injection valve 17 is disposed such that the nozzle hole 17a is opposite to the non-notch portion 50. In more detail, the nozzle hole 17a is formed such that the spray F is sprayed toward a position at a height corresponding to a boundary between the lip portion 32 and the peripheral portion 33 of the non-notch portion 50 or corresponding to the proximity of the boundary when the piston 13 is at the top dead center.

Here, in the present embodiment, the number $N_C$ of the notches 40 is set to satisfy a relationship represented by Formula (1) below in relation to the number of the nozzle holes 17a of the fuel injection valve 17 (hereinafter, referred to as the number $N_H$ of the nozzle holes).

$$N_H/2 \leq N_C \leq N_H \ldots (1)$$

Specifically, the number of the notches 40 is not less than a half the number $N_H$ of the nozzle holes and not more than the number $N_H$ of the nozzle holes. In other words, the notch 40 is configured to be positioned adjacent to at least one side in a circumferential direction of the spray F arriving at the inner circumferential wall surface 30a of the cavity 30.

In the present embodiment, the number of the notches 40 is the same as the number $N_H$ of the nozzle holes of the fuel injection valve 17. Specifically, the notches 40 are formed at 10 places of the cavity opening 31 at equal intervals in the circumferential direction. The notches 40 are positioned adjacent to each other on both sides in the circumferential direction of each spray F injected to the non-notch portion 50.

The first recessed portion 60 is recessed at the circumferential edge of the cavity opening 31 so as to be positioned radially more to the outer side than the non-notch portion 50 and is formed to have a groove-shape of a predetermined width in a circumferential direction. In detail, the first recessed portion 60 has a first bottom wall 61 and a pair of first vertical walls 62. The first bottom wall 61 forms a belt-shaped bottom surface having a predetermined width in the circumferential direction and faces the center of the cavity 30. The pair of first vertical walls 62 juts radially from both ends in the circumferential direction of the first bottom wall 61, and is disposed opposite to each other in the circumferential direction.

As indicated by a dashed line in FIG. 2, the first bottom wall 61 inclines so as to be positioned radially inward as separating from the piston crown surface 13a (as nearing to the peripheral portion 33 of the cavity 30). More specifically, on the sectional view shown in FIG. 2, the first bottom wall 61 is formed along a tangent line circumscribed on the peripheral portion 33 of the cavity 30. In this manner, a lower end 61a of the first bottom wall 61 and the peripheral portion 33 are smoothly continuous without having folds and steps.

In the present embodiment, the first bottom wall 61 inclines radially inward from the piston crown surface 13a toward the peripheral portion 33 at an inclination angle $\alpha$ of about 30° to the center axis X of the cylinder 12a. The first bottom wall 61 only needs not to incline radially outward toward the peripheral portion 33. Therefore, the inclination angle $\alpha$ may be larger or smaller than 30° within a range of 0° (i.e. an angle at which the first bottom wall 61 becomes parallel to the center axis X) or more. The inclination angle $\alpha$ is preferably set to be 0° or more and 50° or less.

When the inclination angle $\alpha$ is less than 0°, a path leading from the piston crown surface 13a to the first recessed portion 60 will largely bend to the radially outer side on the cross section shown in FIG. 2. This makes it difficult to smoothly introduce an air flow on the piston crown surface 13a into the cavity 30. On the other hand, the larger the inclination angle $\alpha$ becomes, the smoother is made the path leading from the piston crown surface 13a side to the first recessed portion 60 on the cross section shown in FIG. 2. This makes it easier to introduce an air flow into the cavity 30 and to increase a flow rate of the air.

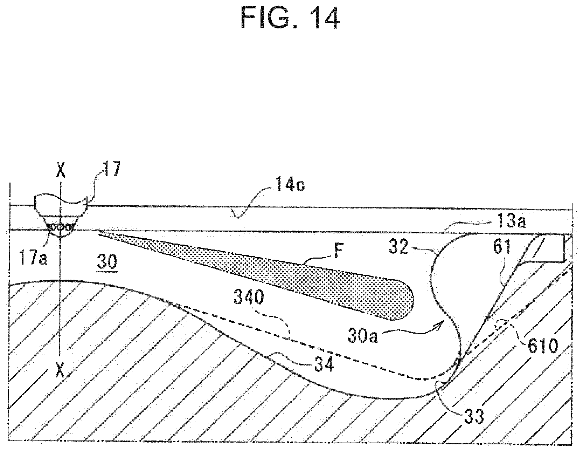

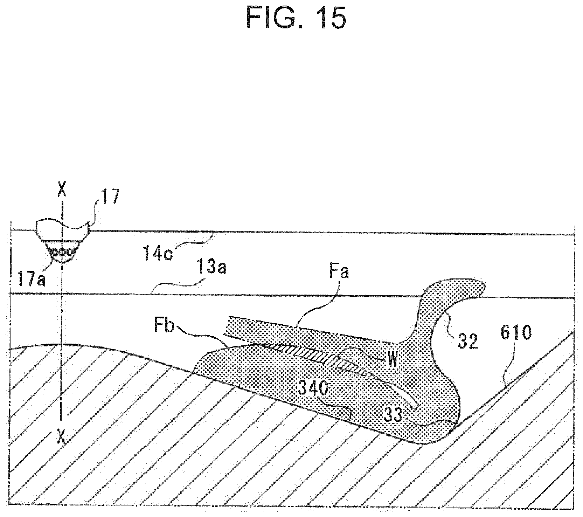

However, when the inclination angle $\alpha$ exceeds 50°, it is necessary to excessively reduce a volume of the cavity 30 in order to maintain a compression ratio of the combustion chamber 11. For example, as indicated by a dashed line in FIG. 14, with an inclination angle $\alpha$ of a first bottom wall 610 increased to be larger than 50°, a central ridge portion 340 of the cavity 30 can be formed to have a smaller depth. However, in such a case, since spray Fa injected from the fuel injection valve 17 and spray Fb having a direction changed by the inner circumferential wall surface 30a and guided along the central ridge portion 340 are liable to interfere with each other (reference mark W in FIG. 15 shows an interference region) as shown in FIG. 15, the flow of the spray F is hindered to reduce mixability with air. Although it is also possible to reduce the cavity opening 31 in size, in such a case, the spray F will have relatively strong penetration at the time of arrival at the inner circumferential wall surface 30a and thus a cooling loss increases.

As shown in FIG. 7, the pair of first vertical walls 62 disposed opposite to each other in the circumferential direction has an upstream side first vertical wall 621 positioned on the swirl upstream side and a downstream side first vertical wall 622 positioned on the swirl downstream side. The upstream side first vertical wall 621 is formed along a plane extending radially toward the center of the cylinder 12a, in other words, along a plane passing the center of the cylinder 12a and being in parallel to the center axis X of the cylinder 12a (orthogonal to the piston crown surface 13a). The downstream side first vertical wall 622 is curved along an arc positioned more to the swirl upstream side toward the radially outer side in a plan view (in a top view) and formed along a curved surface which is in parallel to the center axis X of the cylinder 12a (orthogonal to the piston crown surface 13a).

As shown in FIG. 6, the second recessed portion 70 is recessed downward (to the bottom side of the cavity 30) so as to be one level below the piston crown surface 13a. In detail, the second recessed portion 70 has a second bottom wall 71 (corresponding to the bottom wall of the present invention) inclining so as to be smaller in height toward the swirl downstream side (so as to be positioned on the bottom side of the cavity 30), and a second vertical wall 72 (corresponding to the vertical wall of the present invention) standing from a circumferential edge of the second bottom wall 71 on the swirl downstream side.

The second bottom wall 71 is an inclined surface which becomes smaller in height toward the swirl downstream side and is formed along an inclined surface which is in parallel to a normal line orthogonal to the center axis X of the cylinder 12a (a straight line radially extending from the center of the cylinder 12a) as shown in FIG. 8.

With reference to FIG. 8, a shape of the second recessed portion 70 will be described more specifically. Among points positioned on a radially inward circumferential edge of the downstream side first vertical wall 622, a point positioned most radially inward, i.e. a point corresponding to a least diameter portion (a portion protruding radially most inward) of the lip portion 32 is set to be a reference point P0 and a plane passing the reference point P0 and orthogonal to a straight line radially extending from the center of the cylinder 12a (i.e. orthogonal to a radial direction) is set to be a virtual plane Q (indicted by a chain double-dashed line).

Additionally, a straight line passing the reference point P0 and extending in parallel to the center axis X of the cylinder 12a on the virtual plane Q is set to be a first line L1, a straight line obtained by projecting the second bottom wall 71 on the virtual plane Q (i.e. a line of intersection between a surface which is a radially inward extension of the second bottom wall 71 and the virtual plane Q) is set to be a second line L2, and a straight line obtained by projecting the piston crown surface 13a on the virtual plane Q (i.e. a line of intersection between a surface which is a radially inward extension of the piston crown surface 13a and the virtual plane Q) is set to be a third line L3. Further, a point of intersection between the first line L1 and the third line L3 is set to be a first point P1, a point of intersection between the first line L1 and the second line L2 is set to be a second point P2, and a point of intersection between the second line L2 and the third line L3 is set to be a third point P3.

In this case, the position of the second point P2 is set to have a distance H of 2 mm or more from the first point P1 in a direction parallel to the first line L1, and have a distance W of 2 mm or more from the third point P3 in a direction parallel to the third line L3. Further, the second point P2 is positioned above (on the piston crown surface 13a side) and radially inward of the lower end 61a of the first bottom wall 61 (i.e. a connection portion between the first bottom wall 61 and the inner circumferential wall surface 30a) and is positioned between the reference point P0 and the first point P1.

The second bottom wall 71 is continuous with the piston crown surface 13a on the swirl upstream side without a step. In other words, the second bottom wall 71 is formed such that an upstream side edge 73, which is an edge of the second bottom wall 71 on the swirl upstream side, is positioned on the piston crown surface 13a. The upstream side edge 73 continuously extends in a radial manner from an upper end (an end on the piston crown surface 13a side) of the upstream side first vertical wall 621 of the first recessed portion 70. The second bottom wall 71 is formed so as to have a height gradually decreasing from the upstream side edge 73 toward the swirl downstream side (so as to be positioned more to the bottom side of the cavity 30 toward the swirl downstream side).

As shown in FIG. 7, the second vertical wall 72 continuously extends in an arched manner from an upper end of the downstream side first vertical wall 622 (an end on the piston crown surface 13a side) toward the radially outer side and the swirl upstream side and is connected to an outer end 73a which is an end, on the most radially outer side, of the upstream side edge 73. More specifically, the second vertical wall 72 is formed to coincide with a circumference of a virtual circle C0 indicated by a chain double-dashed line. Similarly, the downstream side first vertical wall 622 is also formed to coincide with the circumference of the virtual circle C0. The downstream side vertical wall 42b of the notch 40 is formed to be a series of curved surfaces as a result of connection, without steps, of the downstream side first vertical wall 622 and the second vertical wall 72 thus formed on the same circumference.

As shown in FIG. 7, when a straight line passing the first point P1 (or the reference point P0, the second point P2) to radially extend is set to be a fourth line L4 and a concentric circle which is offset radially inward from an outer circumferential surface of the piston 13 by a predetermined amount d is set to be a circle C1, the virtual circle C0 is set to be a circle tangent to the fourth line L4 and the circle C1. The virtual circle C0 is a circle passing the first point P1 (or the reference point P0, the second point P2).

Specifically, in the plan view shown in FIG. 7, the downstream side vertical wall 42b of the notch 40 is set to be a curved surface extending along the virtual circle C0 over a part from the outer end 73a of the upstream side edge 73 of the second recessed portion 70 to the reference point P0 toward the swirl downstream side. The downstream side vertical wall 42b is formed to be directed, at the reference point P0, to the center axis X of the cylinder 12a, in other words, is formed such that an extension line extended from a radially inward end of the downstream side vertical wall 42b to a direction of a tangent line of the virtual circle C0 crosses the center axis X of the cylinder 12a. The predetermined amount d is set to be an appropriate value which enables a required amount of a thickness between the second recessed portion 70 and the outer circumferential surface of the piston 13 to be ensured.

In a connection portion between the first bottom wall 61 and the second bottom wall 71, a chamfered portion 43 which is round in an arched manner in a sectional view of FIG. 2 is formed. In other words, the bottom wall 41 of the notch 40 is formed to incline more and more strongly in the order of the second bottom wall 71, the chamfered portion 43, and the first bottom wall 61 from the piston crown surface 13a to the peripheral portion 33 of the cavity 30. As shown in FIG. 7, the chamfered portion 43 extends between the upstream side vertical wall 42a and the downstream side vertical wall 42b so as to be positioned radially more inward toward the swirl downstream side while inclining. As shown in FIG. 2, a chamfered diameter r1 of the chamfered portion 43 is set to be 2 mm or more and to be half a diameter r0 (see FIG. 7) of the virtual circle C0 or less.

As described above, the second bottom wall 71 inclines so as to become higher toward the swirl downstream side (so as to be positioned on the bottom side of the cavity 30). Therefore, the second vertical wall 72 is formed to gradually increase in height toward the swirl downstream side (or a radially inner diameter side) in the direction of the center axis X of the cylinder 12a.

Returning to FIG. 3, each notch 40 is formed within a predetermined angle range β around the center axis X of the cylinder 12a. The angle range β here is an opening width of the notch 40 opened in the inner circumferential wall surface 30a of the cavity 30, i.e., a width in the circumferential direction, at the least diameter portion of the lip portion 32 (the portion protruding radially most inward), of the notch 40. Since the downstream side vertical wall 42b extends to the radially outer side and to the swirl upstream side in an arched manner (which gradually decreases a width of the notch 40 in the circumferential direction), at a position other than the least diameter portion of the lip portion 32 (a radially outer side of the least diameter portion), an angle range of the notch 40 in the circumferential direction becomes smaller than β.

The angle range β is set such that the non-notch portion 50 receiving the spray F is ensured within a predetermined angle range (at least 15°) in consideration of a spray angle θ (a breadth in a plan view in FIG. 3) of the spray F. In detail, the angle range β of the notch 40 is set to be 7.5° or more and 30° or less in consideration of the assumed number of the nozzle holes (e.g. at most 16 nozzle holes) such that the non-notch portion 50 has an angle range wider than the spray angle θ of the spray F.

Specifically, the non-notch portion 50 needs to be within the angle range of at least 15° in consideration of the spray angle 0 of the spray F. In this case, since when each of the plurality of notches 40 is set to have the angle range β of 7.5°, a total of 16 non-notch portion portions 50 with the angle range of 15° can be formed, the fuel injection valve 17 with the maximum number of 16 nozzle holes can be used. Since when each of the plurality of notches 40 is set to have the angle range β of 30°, a total of eight non-notch portion portions 50 with the angle range of 15° can be formed, the fuel injection valve 17 with the maximum number of eight nozzle holes can be used.

In the present embodiment, the angle range β of the notch 40 is set to be 14° and the angle range of the non-notch portion 50 is set to be 22°. The angle range of the non-notch portion 50 (22°) is wider than the above lower limit angle range (15°).

Next, operations and effects of the present embodiment will be described.

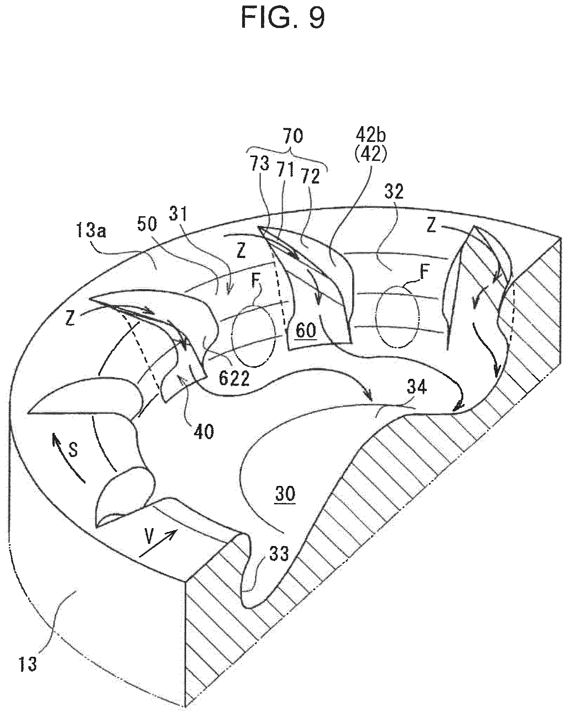

FIG. 9 is a perspective view schematically showing the spray F and the air flow Z in the combustion chamber 11 when the piston 13 is positioned in proximity to the compression top dead center. As described above, the present embodiment has a configuration in which the swirl flow S and the squish flow V are generated in the combustion chamber 11 (see FIG. 3). Thus, the horizontal flows S and V generated on the piston crown surface 13a positioned in proximity to the compression top dead center cause generation of an air flow Z to be introduced into the cavity 30 from the notch 40.

Specifically, as a result of combination of the swirl flow S flowing clockwise in a plan view and the squish flow V flowing from the radially outer side to the radially inner side, the air flow Z is generated which flows from the inner circumferential wall surface 30a of the cavity 30 to the central ridge portion 34 side via the plurality of notches 40. Therefore, as shown in FIG. 9, the air flow Z introduced into the cavity will spirally flow toward the center of the central ridge portion 34 so as to be directed to the radially inner side along the squish flow V while flowing clockwise along the swirl flow S.

At this time, the notch 40 serves to introduce the air flow Z into the cavity 30 more smoothly. Specifically, in the present embodiment, the first recessed portion 60 and the second recessed portion 70 continuous to the first recessed portion 60 on the radially outer side configure the notch 40, and the downstream side vertical wall 42b of the notch 40, i.e., the downstream side first vertical wall 622 of the first recessed portion 60 and the second vertical wall 72 of the second recessed portion 70 are formed to extend in an arched manner from a position corresponding to a radially outer side end of the second recessed portion 70 (the outer end 73a) toward the swirl downstream side and a radially inner side (see FIG. 7 and FIG. 8). Therefore, the swirl flow S flowing in the circumferential direction on the crown surface 13a (the squish portion) of the piston 13 in the proximity of the top dead center is guided to the first recessed portion 60 along the arc-shaped second vertical wall 72 of the second recessed portion 70 while having a direction gradually changed to the radially inner side. Specifically, in the present embodiment, it is possible to smoothly introduce a flow in a horizontal direction on the piston crown surface 13a (the squish portion) into the first recessed portion 60 while being gradually changed to the radially inner side, and also to suppress an energy loss generated in the course of the introduction, resulting in maintaining force of the air flow Z high which is introduced into the cavity 30.

Additionally, the second recessed portion 70 inclines to have a height gradually decreased toward the swirl downstream side (to be positioned more to the bottom side of the cavity 30 toward the swirl downstream side). Therefore, the swirl flow S flowing on the piston crown surface 13a in the circumferential direction is guided to the first recessed portion 60 while having a direction gradually changed to the lower side (the bottom side of the cavity 30) along the second bottom wall 71 of the second recessed portion 70. Since in the present embodiment, the direction of the flow is thus changed by the inclined bottom wall (the second bottom wall 71) in the second recessed portion 70, as compared with a case where the flow is directly guided from the piston crown surface 13a to the first recessed portion 60, the flow can be smoothly introduced into the first recessed portion 60 while gradually having the horizontal direction of the flow on the piston crown surface 13a changed to the lower side. This enables introduction of the air flow Z from the piston crown surface 13a into the cavity 30 while maintaining relatively strong force.

Further, the roundish chamfered portion 43 is formed at a connection portion between the first recessed portion 60 and the second recessed portion 70. This enables the air flow Z introduced from the piston crown surface 13a into the second recessed portion 70 to be smoothly introduced into ion the first recessed portion 60 via the chamfered portion 43. If no chamfered portion is formed at the connection portion between the first recessed portion 60 and the second recessed portion 70, the direction of the air flow Z will be sharply changed over a part from the second recessed portion 70 to the first recessed portion 60. As a result, an energy loss will be increased to reduce force of the air flow to be introduced into the cavity 30.

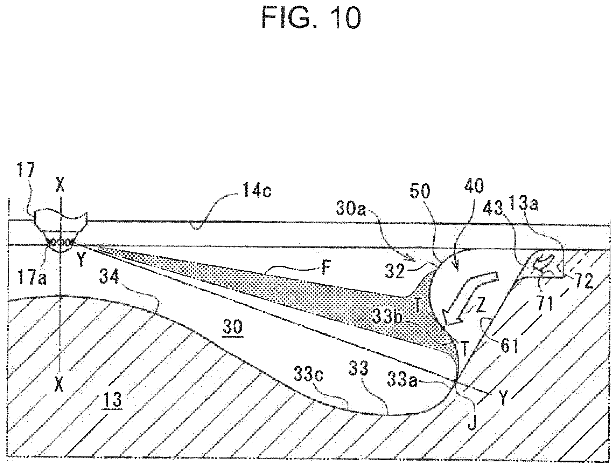

Here, FIG. 10 shows a state of a first half of the combustion in the low load range. As shown in FIG. 10, in the low load range, after the spray F injected from the fuel injection valve 17 arrives at the inner circumferential wall surface 30a, a large part of the spray F has a direction changed to the bottom side of the cavity 30 along the peripheral portion 33. However, since in the low load range, the spray F has weak penetration (i.e. low fluidity), the spray F will stay in proximity to the peripheral portion 33.

By contrast, in the present embodiment, the air flow Z introduced from the notch 40 spirally flows toward the central ridge portion 34 while involving the spray F positioned on the swirl downstream side as shown in FIG. 9 and FIG. 10. This promotes a flow of the spray F staying in the peripheral portion 33 toward the central ridge portion 34 side as shown in FIG. 10, resulting in increasing mixability of the spray F with air in the cavity 30.

Besides, since the air flow Z faces generally the same direction as the direction of the spray F staying in the peripheral portion 33, the air flow Z rather assists movement of the spray F to the central ridge portion 34 side without hindering the flow of the spray F. This further promotes the flow of the spray F. Additionally, since the first bottom wall 61 of the first recessed portion 60 is formed along the tangent line circumscribed on the peripheral portion 33 in a sectional view, the air flow Z introduced from the notch 40 can be smoothly introduced into the peripheral portion 33. This further promotes the flow of the spray F.

Further, since in the present embodiment, the radius $R_2$ of the arc forming the second portion 33b of the peripheral portion 33 is relatively large (larger than the radius $R_1$ of the first portion 33a), it is possible to reduce an angle formed by a direction of a tangent line T in a part against which the spray F collides and by a spray direction of the spray F as shown in FIG. 10. This prevents the spray F from heavily colliding against the inner circumferential wall surface 30a to scatter around, thereby enabling the spray F to be smoothly introduced into the second portion 33b.

Also, because of presence of the lip portion 32, the spray F colliding against the lip portion 32 near the boundary between the second portion 33b and the lip portion 32 will be also guided to smoothly flow mainly to the second portion 33b side without much scattering. In this manner, a large part of the spray F is introduced into the cavity 30.

Then, the spray F moves from the second portion 33b to the first portion 33a to have the flow direction changed from the radially outer side of the piston 13 to the radially inner side. On this occasion, since the radius $R_1$ of the first portion 33a is smaller than the radius $R_2$ of the second portion 33b, spread of the spray F is suppressed, while a flow of the spray F directed to the third portion 33c is accelerated with the assistance of the air flow Z from the notch 40.

At this time, a part of fuel has been already combusted to generate combustion gas, and the spray F is in a semi-combustion state where the combustion gas and uncombusted fuel are mixed. The flow of the spray F in the semi-combustion state (hereinafter, referred to as a semi-combusted gas) will be accelerated by the first portion 33a, thereby blowing off the fuel attached to the wall surface of the peripheral portion 33. This enables suppression in an amount of soot generated due to combustion in a locally rich region including the attached fuel.

Also, the peripheral portion 33 is formed to be symmetrical with respect to the straight line Y linking a position J in the first portion 33a and the nozzle hole 17a of the fuel injection valve 17, the position J being farthest from the fuel injection valve 17 at the time of fuel injection. Thus, the flow of the semi-combusted gas which is decelerated after once accelerated is converted smoothly, at the position J in the first portion 33a as a turning point, into a flow directed from the radially outer side to the radially inner side of the piston 13 without largely scattering.

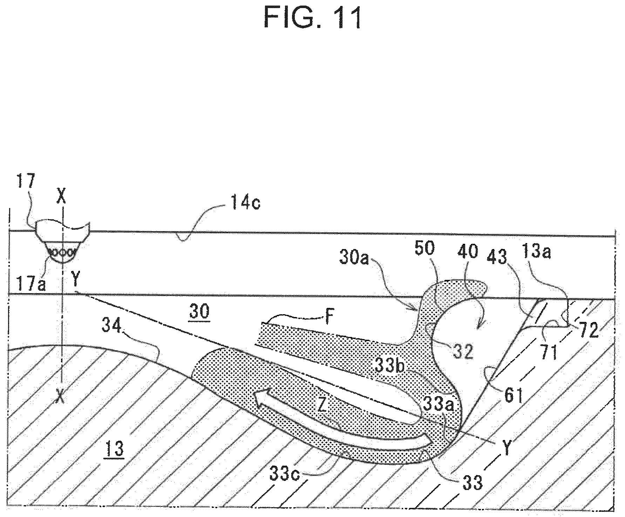

Next, description will be made of a latter half of the combustion, in which the semi-combusted gas having the direction changed to the radially inner side of the piston 13 is mixed with a large amount of air in the central ridge portion 34 of the cavity 30. As shown in FIG. 11, the semi-combusted gas having the direction changed to the radially inner side is guided along the third portion 33c of the peripheral portion 33 to move from the peripheral portion 33 toward the central ridge portion 34 of the bottom of the cavity 30 with the protruded center part.

On this occasion, since the radius $R_3$ of the third portion 33c in the peripheral portion 33 is set to be larger than

the radius $R_1$ of the first portion 33a, abrupt direction change of the spray F introduced into the third portion 33c to the cavity opening 31 side (upward) can be prevented. This prevents the spray F having the direction changed from interfering with the spray F immediately after being injected from the fuel injection valve 17.

As a result, the semi-combusted gas will flow toward the central ridge portion 34 side of the cavity 30 while maintaining its force without being scattered and will be satisfactorily mixed with a large amount of air present in a central portion of the combustion chamber 11, resulting in generating a uniform and lean combustion gas. Then, because of progress of the combustion in the state, generation of soot due to combustion in the rich region will be suppressed, and also because the whole of the combustion gas is relatively lean, partly generated soot will be effectively oxidized.

Specifically, even the spray F liable to stay in the inner circumferential wall surface 30a of the cavity due to weak penetration is allowed to have its flow promoted to have improved mixability with air in the cavity 30.

Besides, the air flow Z is introduced into the cavity 30 from the plurality of notches 40, and the air flow Z enables the spray F injected from the plurality of nozzle holes 17a to flow to the central ridge portion 34 side of the cavity 30. Additionally, since the spray F is injected toward the non-notch portion 50, after being guided to the inner circumferential wall surface 30a of the cavity 30 to have its direction changed, the spray F will have the flow to the central ridge portion 34 side further promoted by the air flow Z from the notch 40, the air flow Z being introduced in the same direction as the changed direction.

Each of the plurality of notches 40 is formed within an angle range of 7.5° to 30° around the center axis X of the cylinder 12a in a plan view. Since this enables the angle range of the non-notch portion 50 to be ensured neither too large nor too small, the spray F can be satisfactorily guided by the inner circumferential wall surface 30a of the cavity 30, and the air flow Z from the notch 40 can be effectively generated.

For example, when the angle range β of the notch 40 is set to be less than 7.5°, the volume of the notch 40 becomes relatively small to reduce momentum of the air flow introduced by the notch 40 and reduce the effect of promoting the flow of spray.

Conversely, even when the angle range β of the notch 40 is increased to be larger than 30°, improvement of the effect of promoting the flow of the spray F by the notch 40 cannot be expected so much. Rather, an excessive increase in the volume of the notch 40 produces the necessity of excessively reducing the volume of the cavity 30 in order to maintain the compression ratio of the combustion chamber 11. In this case, this is disadvantageous in terms of mixability of spray and a cooling loss as already described with reference to FIG. 14 and FIG. 15. Specifically, the shallow combustion chamber 11 makes sprays injected from the fuel injection valve 17 be liable to interfere with each other to reduce mixability of sprays with air. On the other hand, when the cavity opening 31 is reduced in size, the spray F will have relatively strong penetration at the time of arrival at the inner circumferential wall surface 30a and thus a cooling loss increases.

Also, as shown in FIG. 8, on the virtual plane Q, the position of the second point P2 is set to have a distance H of 2 mm or more from the first point P1 in a direction parallel to the first line L1, and have a distance W of 2 mm or more from the third point P3 in a direction parallel to the third line L3. In the present embodiment, this arrangement enables the chamfered portion 43 having a chamfer diameter of at least 2 mm to be formed at the connection portion between the first recessed portion 60 and the second recessed portion 70, while preventing the first recessed portion 60 from being lost.

Specifically, in a case where the chamfered portion 43 has a chamfer diameter of 2 mm, if the distance W between the second point P2 and the third point P3 is less than 2 mm, the first recessed portion 60 might be lost due to the chamfered portion 43. On the other hand, in a case where the distance W is 2 mm or more as described above, the first recessed portion 60 will not be lost and therefore, the air flow Z can be reliably guided into the cavity 30 using the first recessed portion 60.

Additionally, since the distance H between the first point P1 and the second point P2 is 2 mm or more, the second recessed portion 70 having an enough depth can be formed. This arrangement enables air flowing on the piston crown surface 13a to be reliably guided into the first recessed portion 60 through the second recessed portion 70.

Additionally, since the second point P2 is positioned above the lower end 61a of the first bottom wall 61 (on the piston crown surface 13a side), the second recessed portion 70 can be prevented from directly appearing on the inner circumferential wall surface 30a of the cavity 30. Specifically, the air flowing on the piston crown surface 13a is always introduced into the cavity 30 through both the second recessed portion 70 and the first recessed portion 60 without being introduced directly into the cavity 30 through the second recessed portion 70. As a result, in the present embodiment, the air flow Z can be smoothly introduced into the cavity 30 sequentially via the second recessed portion 70 and the first recessed portion 60 while being changed downward (toward the bottom side of the cavity 30) in direction in stages.

Additionally, since the chamfered diameter r1 of the chamfered portion 43 is set to be 2 mm or more, the air flow Z can be smoothly introduced from the second recessed portion 70 to the first recessed portion 60 along the chamfered portion 43. On the other hand, in a case where the chamfer diameter of the chamfered portion 43 is less than 2 mm, since the direction of the air flow Z will change relatively abruptly from the second recessed portion 70 toward the first recessed portion 60, there is a concern about reduction in fluidity.

Also because the chamfered diameter r1 of the chamfered portion 43 is set to be a half or less than a half the diameter r0 of the virtual circle C0, loss of the second recessed portion 70 due to the chamfered portion 43 can be prevented.

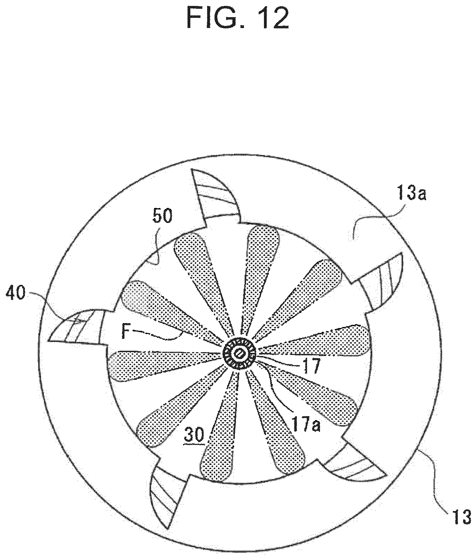

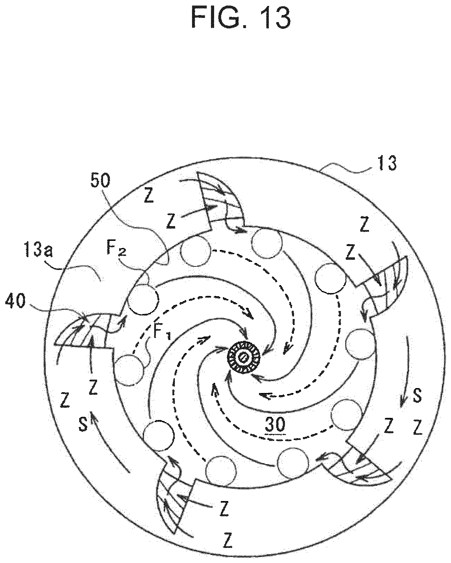

FIG. 12 and FIG. 13, which are plan views of the combustion chamber 11, show a modification in which the number $N_C$ of the notches 40 is half the number $N_H$ of the nozzle holes of the fuel injection valve 17. In the example shown in FIG. 12, the number $N_H$ of the nozzle holes is ten and the number Nc of the notches 40 is five. Each spray F injected from the fuel injection valve 17 is, on one side in the circumferential direction, adjacent to the notch 40 and is, on the other side, adjacent to the spray F.

In this case, when the swirl flow S is generated in the combustion chamber 11, as shown in FIG. 13, the air flow Z, while drawing spray $F_1$ adjacent on the upstream side in the swirl flow S (counterclockwise side in FIG. 13) due to its reduced pressure, functions to involve spray $F_2$ adjacent on the downstream side in the swirl flow S (clockwise side in FIG. 13) so as to cause the spray F to flow toward the central ridge portion 34 side of the cavity 30.

The angle range β of the notch 40 may be set as a function of the number $N_H$ of the nozzle holes. In this case, the number $N_H$ of the nozzle holes of the fuel injection valve 17 and the angle range β of the notch 40 are set to satisfy a relationship represented by Formula (2) below.

$$(360° \times 0.1)/N_H \leq β \leq (360° - N_H \times 15°)/N_H \ldots (2)$$

Specifically, in a case where the angle range β is set to be a lower limit value, the total of the angle ranges β of all the notches 40 is ensured to be at least 10% of a peripheral portion of the piston crown surface 13a, and therefore, a flow rate of the air flow introduced into the cavity 30 via the notch 40 can be ensured. In a case where the angle range β is set to be an upper limit value, the non-notch portion 50 can be ensured within an angle range of at least 15°, and therefore, the spray F can be guided to the cavity 30 along the inner circumferential wall surface 30a while being received by the non-notch portion 50.

Although the above embodiment has been described with respect to a piston having a reentrant type cavity as an example, a piston having a cavity of each of various types such as a shallow bottom type and a toroidal type is also applicable.

Also, although in the above embodiment, the plurality of notches 40 is provided in the circumferential edge of the cavity opening 31, the above embodiment is not limited thereto. In other words, only one notch may be provided. This arrangement also enables an air flow to be introduced from the notch 40 into the cavity 30.

[Reference Examples]

Reference Examples 1 to 4 to be described in the following are examples in which instead of the piston 13 having the notch 40 including the first recessed portion 60 and the second recessed portion 70 according to the above embodiment, there is used a piston having a notch of a generally fixed width which is an extension of the first recessed portion 60 to the piston crown surface 13a (the second recessed portion 70 is omitted). With respect to the piston 13 in each of Comparative Examples 1 to 4, the air flow in the cavity was evaluated by CAE analysis. As shown in Table 1, Reference Examples 1 to 4 are the same except for the inclination angle (a value corresponding to the inclination angle α of the embodiment) of the bottom wall of the notch. Specifically, in each of Reference Examples 1 to 4, the number of the nozzle holes of the fuel injection valve is ten, the number of the notches 40 is ten, and the angle range (a value corresponding to the inclination angle β of the embodiment) in the circumferential direction is 14°.

In Reference Example 1, the inclination angle of the notch is 0°, and in Reference Examples 2 to 4, the inclination angles of the notch become sequentially larger, 20°, 30°, and 45°. The air flows at the respective maximum flow speeds in a low speed region of the engine were evaluated using the piston having the notches according to Reference Examples 1 to 4 and the results shown in Table 1 below were obtained. In Table 1, relative to a maximum flow speed of an air flow in Reference Example 1 as 100, maximum flow speeds of air flows are represented by indexes.

[Table 1]

|  | REFERENCE EXAMPLE 1 | REFERENCE EXAMPLE 2 | REFERENCE EXAMPLE 3 | REFERENCE EXAMPLE 4 |
|---|---|---|---|---|
| THE NUMBER OF NOZZLE HOLES | 10 | 10 | 10 | 10 |

(continued)

| | REFERENCE EXAMPLE 1 | REFERENCE EXAMPLE 2 | REFERENCE EXAMPLE 3 | REFERENCE EXAMPLE 4 |
|---|---|---|---|---|
| THE NUMBER OF NOTCHES | 10 | 10 | 10 | 10 |
| INCLINATION ANGLE OF NOTCH | 0° | 20° | 30° | 45° |
| ANGLE RANGE OF NOTCH | 14° | 14° | 14° | 14° |
| MAXIMUM FLOW SPEED | 100 | 148 | 324 | 370 |

As is clear from Table 1, as the inclination angle of the notch is increased from 0°, the maximum flow speed of the air flow Z is increased. As is clear, in particular, from Reference Example 2 and Reference Example 3, as the inclination angle becomes larger than 20°, the maximum flow speed of the air flow is conspicuously increased. On the other hand, as can be found from Reference Example 3 and Reference Example 4, as the inclination angle becomes larger than 30°, a rise effect of the maximum flow speed converges accordingly.

Therefore, by setting the inclination angle of the notch to be 0° or more, the maximum flow speed of the air flow can be increased, thereby increasing fluidity of the spray in the cavity. On the other hand, by setting the inclination angle of the notch to be 50° or less, fluidity of the spray can be effectively increased while preventing the range of the notch from being excessively large.

<Conclusion of Embodiments>

The features of the diesel engine according to the above embodiments are summarized as follows.

The diesel engine includes a cylinder; a cylinder head which covers an end surface of the cylinder and in which an intake port for generating a swirl flow in a combustion chamber is formed; a piston having a cavity recessed to a side opposite to the cylinder head; and a fuel injection valve having a nozzle hole directed into the cavity of the piston positioned at a top dead center. The piston further has a notch which is formed in a circumferential edge of the cavity. The notch includes, in a part of the circumferential edge in the circumferential direction of the cavity, a first recessed portion which is recessed radially outward from an inner circumferential wall surface of the cavity, and a second recessed portion which is recessed from a crown surface of the piston toward a bottom side of the cavity and continuously extends radially outward from an end, on the crown surface side, of the first recessed portion. The second recessed portion has a bottom wall, and a vertical wall standing from a circumferential edge of the bottom wall on a downstream side of the swirl flow. The vertical wall is formed to extend, in an arched manner, radially inward and toward the downstream side of the swirl flow from a position corresponding to a radially outer side end of the second recessed portion in a plan view.

According to the configuration, a horizontal air flow (e.g. a swirl flow or a squish flow) generated on the piston crown surface (the squish portion) in proximity to the top dead center is introduced into the cavity through the notch. The introduced air flow causes the spray injected from the fuel injection valve and arriving at the proximity of the inner circumferential wall surface of the cavity to move toward the central portion side of cavity. Since a flow of the spray to the central portion side of the cavity is promoted in this manner, even the spray liable to stay in the inner circumferential wall surface of the cavity due to weak penetration is allowed to have its flow promoted to have improved mixability with air in the cavity.

Besides, the notch is formed with the first recessed portion and the second recessed portion continuously extending radially outward of the first recessed portion, and the second recessed portion is formed such that the vertical wall on the swirl flow downstream side extends in an arched manner toward the radially outer side and the swirl flow upstream side. Therefore, the swirl flow flowing on the crown surface of the piston (the squish portion) in the circumferential direction is guided into the first recessed portion while being gradually changed in direction to the radially inner side along the arc-shaped vertical wall of the second recessed portion. In other words, with the above configuration, it is possible to smoothly introduce a horizontal direction flow in the squish portion into the first recessed portion while gradually changing the flow to the radially inner side, and also to suppress an energy loss generated in the course of the introduction, resulting in maintaining force of the air flow high which is introduced into the cavity.

A plurality of the notches is preferably formed at intervals from each other in a circumferential direction.

According to the configuration, since an air flow is introduced into the cavity from the plurality of notches, the flow of the spray toward the cavity central portion side can be further enhanced.

Preferably, the fuel injection valve is positioned at the center in a radial direction of the cylinder when viewed from a center axis direction and has a plurality of nozzle holes capable of radially injecting fuel.

The configuration enables spray injected from the plurality of nozzle holes to flow toward the cavity central portion side by the air flow introduced from the notches. In this manner, it is possible to spread, generally evenly in the cavity, spray having promoted mixing with air.

The fuel injection valve preferably has a nozzle hole capable of injecting fuel directed to a non-notch portion as a part other than the notch in the circumferential edge of the cavity.

According to the configuration, the spray injected toward the non-notch portion is guided to the central portion side by the inner circumferential wall surface of the cavity, and the flow of spray toward the central portion side is further promoted by the air flow introduced from the notch.

More preferably, the wall surface of the cavity has a central ridge portion which ridges so as to near to the fuel injection valve toward the center side of the cavity, a peripheral portion formed on a radially more outer side than the central ridge portion so as to be recessed to the radially outer side in a sectional view, and a lip portion formed between the peripheral portion and the crown surface of the piston to protrude radially inward of the piston in a sectional view, in which the nozzle hole of the fuel injection valve is formed to be directed to a position corresponding to the proximity of a boundary between the lip portion and the peripheral portion of the non-notch portion when the piston is at the top dead center.

According to the configuration, use of the shapes of the lip portion and the peripheral portion enables spray injected toward the non-notch portion to flow to the central portion side (the central ridge portion) of the cavity.

**Industrial Applicability**

As described in the foregoing, the diesel engine according to the present invention, in which even spray having weak penetration is allowed to have fluidity in a cavity increased to have promoted mixing with air, can be suitably used in the field of a manufacturing technique of this kind.

**Claims**

1. A diesel engine comprising:

   a cylinder;
   a cylinder head which covers an end surface of the cylinder and in which an intake port for generating a swirl flow in a combustion chamber is formed;
   a piston having a cavity recessed to a side opposite to the cylinder head; and
   a fuel injection valve having a nozzle hole directed into the cavity of the piston positioned at a top dead center, wherein
   the piston further has a notch which is formed in a circumferential edge of the cavity,
   the notch including

      in a part of the circumferential edge in the circumferential direction of the cavity, a first recessed portion which is recessed radially outward from an inner circumferential wall surface of the cavity, and
      a second recessed portion which is recessed from a crown surface of the piston toward a bottom side of the cavity and continuously extends radially outward from an end, on a crown surface side, of the first recessed portion,

      the second recessed portion having a bottom wall, and a vertical wall standing from a circumferential edge of the bottom wall on a downstream side of the swirl flow, the vertical wall being formed to extend, in an arched manner, radially inward and toward the downstream side of the swirl flow from a position corresponding to a radially outer side end of the second recessed portion in a plan view.

2. The diesel engine according to claim 1, wherein
   a plurality of the notches is formed at intervals from each other in a circumferential direction.

3. The diesel engine according to claim 1 or 2, wherein
   the fuel injection valve is positioned at the center in a radial direction of the cylinder when viewed from a center axis direction and has a plurality of nozzle holes capable of radially injecting fuel.

**4.** The diesel engine according to any one of claims 1 to 3, wherein
the fuel injection valve has a nozzle hole capable of injecting fuel directed to a non-notch portion as a part other than the notch in the circumferential edge of the cavity.

**5.** The diesel engine according to claim 4, wherein
the wall surface of the cavity has a central ridge portion which ridges so as to near to the fuel injection valve toward the center side of the cavity, a peripheral portion formed on a radially more outer side than the central ridge portion so as to be recessed to the radially outer side in a sectional view, and a lip portion formed between the peripheral portion and the crown surface of the piston to protrude radially inward of the piston in a sectional view, and
the nozzle hole of the fuel injection valve is formed to be directed to a position corresponding to the proximity of a boundary between the lip portion and the peripheral portion of the non-notch portion when the piston is at the top dead center.

# FIG. 1

# FIG. 2

EP 3 578 774 A1

# FIG. 3

# FIG. 4A

# FIG. 4B

# FIG. 5

# FIG. 6

# FIG. 7

# FIG. 8

# FIG. 9

# FIG. 10

# FIG. 11

# FIG. 12

FIG. 13

# FIG. 14

## FIG. 15

## INTERNATIONAL SEARCH REPORT

| | International application No. |
|---|---|
| | PCT/JP2018/005208 |

**A. CLASSIFICATION OF SUBJECT MATTER**
Int.Cl. F02B23/06(2006.01)i, F02B23/00(2006.01)i, F02F3/26(2006.01)i

According to International Patent Classification (IPC) or to both national classification and IPC

**B. FIELDS SEARCHED**

Minimum documentation searched (classification system followed by classification symbols)
Int.Cl. F02B23/06, F02B23/00, F02F3/26

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 9-303149 A (MITSUBISHI MOTORS CORPORATION) 25 November 1997, paragraphs [0015], [0018]-[0020], fig. 4, 5 (Family: none) | 1-5 |
| A | JP 2000-274247 A (TOYOTA MOTOR CORPORATION) 03 October 2000, fig. 1, 2 (Family: none) | 1-5 |

☒ Further documents are listed in the continuation of Box C.      ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16.04.2018 | 24.04.2018 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2018/005208

C (Continuation). DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 087240/1974 (Laid-open No. 16105/1976) (KOMATSU LTD.) 22 December 1976, page 3, lines 1-6, fig. 6, 7 (Family: none) | 1-5 |
| A | JP 5-202755 A (HINO MOTORS, LTD.) 10 August 1993, fig. 3, 4 (Family: none) | 1-5 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015232288 A